# EUROPEAN PATENT SPECIFICATION

(11) **EP 3 761 146 B1**
(45) Date of publication and mention of the grant of the patent: **19.10.2022**
(21) Application number: 20184120.2
(22) Date of filing: 06.07.2020
(51) Int. Cl.: F15B 1/26, F15B 13/02, F15B 21/041, F15B 21/044, F16H 61/00, F16K 11/10, F16K 15/04, F16N 39/00, G05D 16/10

(54) **TANK HYDRAULIC ARRANGEMENT FOR AN OFF-ROAD VEHICLE**
TANKHYDRAULIKANORDNUNG FÜR EIN GELÄNDEFAHRZEUG
AGENCEMENT HYDRAULIQUE DE RÉSERVOIR POUR VÉHICULE TOUT-TERRAIN

(30) Priority: 05.07.2019 IT 201900010986
(43) Date of publication of application: 06.01.2021
(73) Proprietor: CNH Industrial Italia S.p.A., 10135 Torino (IT)
(72) Inventor: Ciarrocchi, Marco Pietro, 64027 Sant'Omero (TE) (IT)
(74) Representative: CNH Industrial IP Department

(56) References cited:
- JP-A- 2000 337 302
- US-A- 5 222 418
- US-A1- 2018 080 507

## Description

### TECHNICAL FIELD

The present invention concerns a hydraulic tank arrangement, in particular to a hydraulic tank arrangement for an off-road vehicles.

### BACKGROUND OF THE INVENTION

Off-road vehicles such as agricultural vehicles use oil both for lubrication of transmission elements and for power use in dedicated hydraulic circuits, e.g. brake circuits or steering circuit.

In order to simplify the oil management, it is common to use the same oil source, i.e. a single tank, for both transmission oil and for other hydraulic power circuits.

However, gearings of transmission and the high temperatures in such mechanical module degrade oil and contaminates this latter with dirty particles, in metal nonmetallic materials. Furthermore, oil is usually mixed in the transmission, thereby increasing the presence of air trapped as mixture in this latter.

The presence of oil containing contaminants and an air mixture is substantially acceptable if such oil is used again in the transmission, since the main function of this latter is the lubrication.

However, the quality of such used oil is unacceptable for being used in other power systems; indeed this would lead to noise and, moreover, to malfunctioning of pumps and/or valves.

Accordingly, it is known to provide a very efficient filter module upstream with respect to main pump so as to ensure the filter of very thin particles, e.g. 30 microns dimension.

However, such filter module is complicated, expensive and requires a constant and frequent maintenance; moreover, it leads to a pressure drop which has to be overcome by main pump.

Furthermore, such common tank usually does not allows enough volume to provide oil to main power circuits of the vehicle, once needed, thereby potentially leading to cavitation phenomenon in main pump.

In order to overcome the above inconvenient, it is known to provide very complex pump module comprising a charge pump configured to add some pressure to oil before it enters into main pump. However, such pump module are particularly noisy and add a further pressure drop thereby increasing vehicle consumption and decreasing its performances.

The only solution to simplify such system would be to use a dedicated tank for hydraulic power circuits and a dedicated tank for transmission oil. However, this would increase encumbrances of the vehicle, since two tanks would be used and two different dedicated hydraulic circuits.

Therefore, the need is felt to use a single tank hydraulic arrangement for filtering and storing oil for both transmission and hydraulic power circuits. However such hydraulic arrangement should be compact, with low pressure drops and allowing the use of low power consumptions elements.

An aim of the present invention is to satisfy the above mentioned needs.

US 5 222 418 describes an example of a hydraulic system comprising a lubrication circuit for lubricating components of a transmission mechanism.

### SUMMARY OF THE INVENTION

The aforementioned aim is reached by a tank hydraulic arrangement as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic scheme of a tank hydraulic arrangement according to the invention;
- Figure 2 is a schematic transversal sectional view of an element of the tank hydraulic arrangement according to the invention; and
- Figure 3A, 3B, 4A and 4B are schematic transversal sectional views of an element of the tank hydraulic arrangement according to the invention in four different operative statuses.

### DETAILED DESCRIPTION OF THE INVENTION

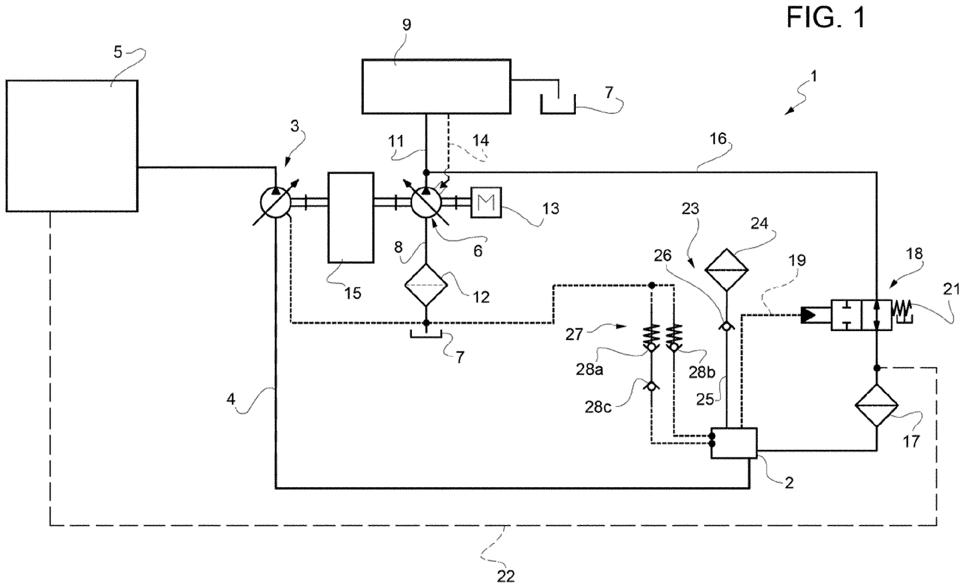

Figure 1 discloses a hydraulic tank arrangement 1 for managing a tank 2 configured to store hydraulic oil for the working of an off-road vehicle such as an agricultural vehicle, e.g. a tractor. Tank may be a volume of 50 liters, or lower.

In particular, hydraulic tank arrangement 1 comprises a main pump 3 configured to suck oil from tank 2 via a conduit 4 for pumping oil towards main hydraulic circuits 5 of the vehicle, e.g. brake circuit, actuator circuits, steering circuit etc.

Furthermore, hydraulic tank arrangement 1 comprises a transmission pump 6 configured to suck oil from a source 7 via a conduit 8 and to provide such oil, pressurized, to a transmission lubricating circuit 9 of the vehicle via a conduit 11.

Source 7 is advantageously the discharge of the transmission lubricating circuit 9 of the vehicle, hydraulic arrangement 1 comprises, on conduit 11, a filter 12, e.g. a 200 micron filter, configured to filter the oil sucked by pump 6 thereby avoiding the sucking of very big particles that could lead to transmission malfunctioning.

Advantageously, transmission pump 6 is carried by a motor 13, e.g. internal combustion engine of the vehicle, and it can be controlled by a load-sensing signal 14 coming from transmission lubricating circuit 9. Preferably, motor 13 is furthermore configured to carry main pump 3; in the described embodiment, torque input shaft of motor 13 which carries transmission pump 6 is furthermore connected to a gear ratio module 15 configured to vary the torque provided to transmission pump 6 to a value suitable for carrying main pump 3.

Hydraulic arrangement 1 further comprises a spilling conduit 16 fluidly connecting conduit 11 and tank 2 and configured to spill part of the pressurized fluid coming from transmission pump 6. Advantageously, hydraulic arrangement 1 comprises a filter 17 fluidly interposed on conduit 16 and configured to further filter oil coming from pump 6 to avoid dirty particles to enter in tank 2. In particular, filter 17 is at least one order of magnitude, i.e. ten times smaller, filter, e.g. a 8-20 microns filter.

Hydraulic arrangement 1 further comprises a selection valve 18 fluidly interposed on conduit 16 upstream with respect to filter 17 and configured to assume a first position into which it allows fluidic communication between filter 17 and conduit 11 via conduit 16 and a second position into which such communication is denied. Accordingly to the described embodiment, selection valve 18 is a two ways - two position valve.

Preferably, selection valve 18 is hydraulically controlled via a hydraulic signal 19; advantageously, hydraulic signal 19 is taken from tank 2 and may acts against the pressure of atmospheric pressure together with the force elastic element 21 configured to maintain selection valve 18 in its first position till a preset pressure threshold is reached. Preferably such present pressure threshold of hydraulic signal 19 is about 0,35 bar.

Preferably, discharge of main hydraulic circuits 5 of the vehicle are fluidly connected via a related conduit 22 to filter 17, in particular in a position downstream with respect to selection valve 18. Accordingly, oil taken by source 6 and oil from discharge of main hydraulic circuits 5 flow together into filter 17 for being filtered.

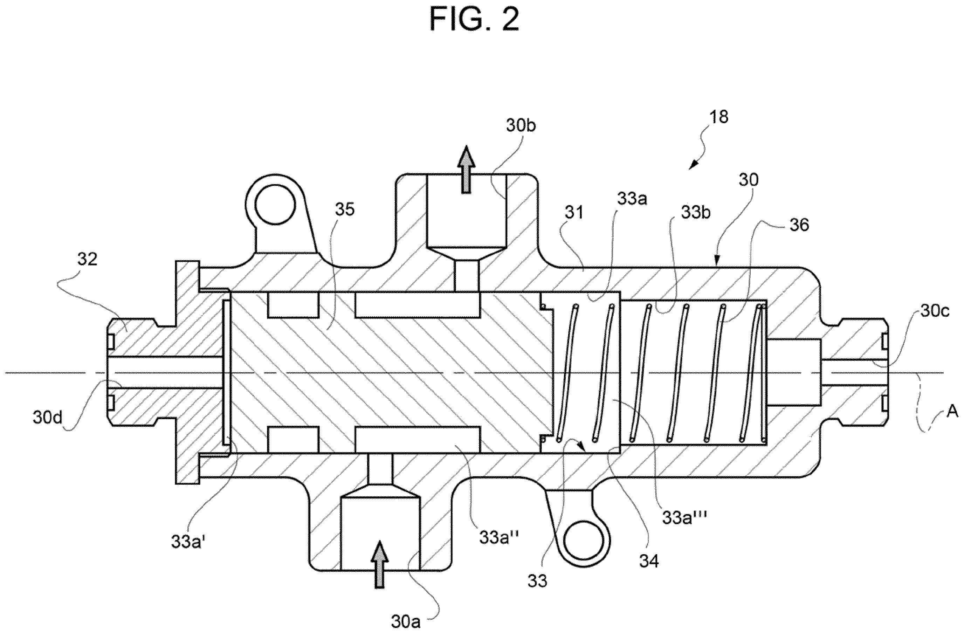

Figure 2 shows a possible embodiment of selection valve 18 to accomplish the aforementioned functions.

Selection valve 18 comprises a housing 30 configured to define a first opening 30a fluidly connectable to conduit 11, a second opening 30b fluidly connectable to filter 17, a third opening 30c fluidly connected to atmospheric air and a fourth opening 30d fluidly connected to tank 2. Preferably, housing 30 is made in two pieces, a first piece 31 defining first, second and third openings 30a, 30b and 30c and a second piece 32, carried defining fourth opening 30d.

Advantageously, first piece 31 defines an inner cylindrical cavity 33 around a longitudinal axis A of first piece 31 and second piece 32 is configured as a cap, detachably coupled to first piece 31, for closing said cavity from one axial side. Inner cavity 33 furthermore comprises a first portion 33a and a second portion 33b having a diameter lower than first portion 33a, thereby defining a shoulder 34.

Selection valve 18 comprises a spool 35, housed inside first portion 33a of cavity 33 and configured to slide axis A from a first extreme position in which it contacts second piece 31 and a second extreme position into which it contacts shoulder 34. In particular, spool 35 slides in tight manner against an inner surface of first portion 33a of cavity 33 thereby dividing this latter in a first portion 33a' configured house oil coming from fourth housing 30d, i.e. hydraulic signal 19, a second portion 33a" suitable for allowing fluidic communication of oil from first to second openings 33a, 33b and a third portion 33a‴, continuous with second portion 33b of cavity 33 and suitable for housing air from the atmosphere. Since the sliding of spool 35 is realized in tight manner, the three portions 33a', 33a", 33a‴ cannot fluidly communicate with each other.

Selection valve 18 further comprises an elastic element 36, housed in side portions 33b and 33a‴ configured to impart an axial force along axis A to spool 35 in order to maintain this latter so that it is possible to allow fluidic communication between first and second openings 33a, 33b. Preferably such elastic element 36 is a coil spring.

Going back to tank hydraulic arrangement 1, it further comprises a breather module 23 configured to allow air expulsion from tank 2. In particular, in the described embodiment, breather module 23 comprises an air filter 24 fluidly connected by a conduit 25 to tank 2 and a check valve 26 fluidly interposed on conduit 25 to avoid passage of liquid towards air filter 24.

Hydraulic arrangement 1 further comprises a level management module 27 configured to maintain the pressure of tank 2 between preset pressure thresholds, e.g. 0,2_, 0-5 bars. Functionally, level management module 27 comprises a pair of check valves 28a, 28b fluidly interposed between discharge/source 7 and tank 2; accordingly, first check valve 28a is set to a first pressure level, e.g. 0,2 bar, while second check valve 28b is set to a second pressure level different from the first pressure level, e.g. 0,5 bar. Furthermore, a third check valve 28c is fluidly interposed between tank 2 and second check valve 28b.

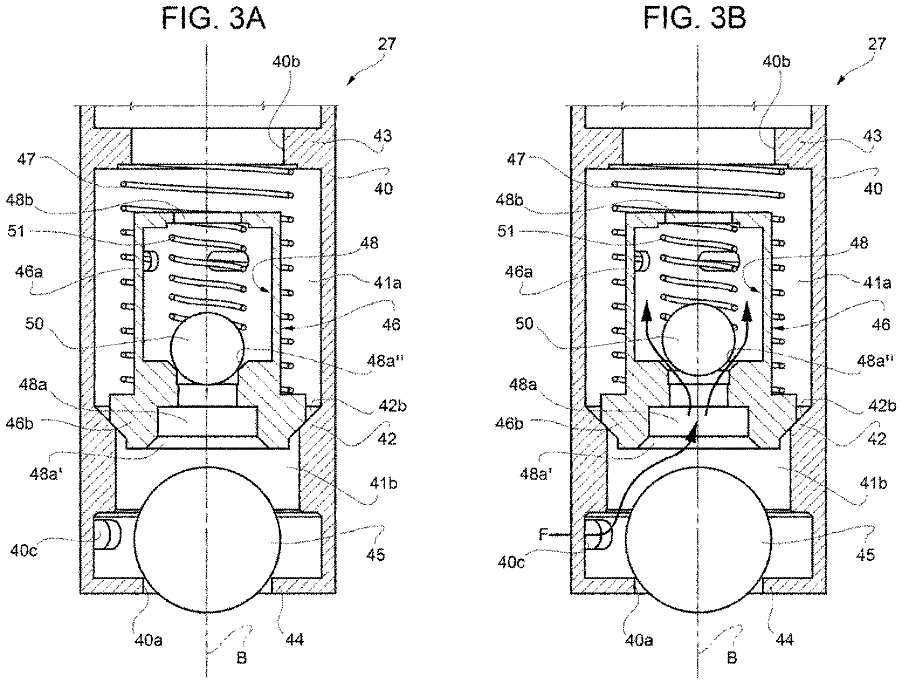

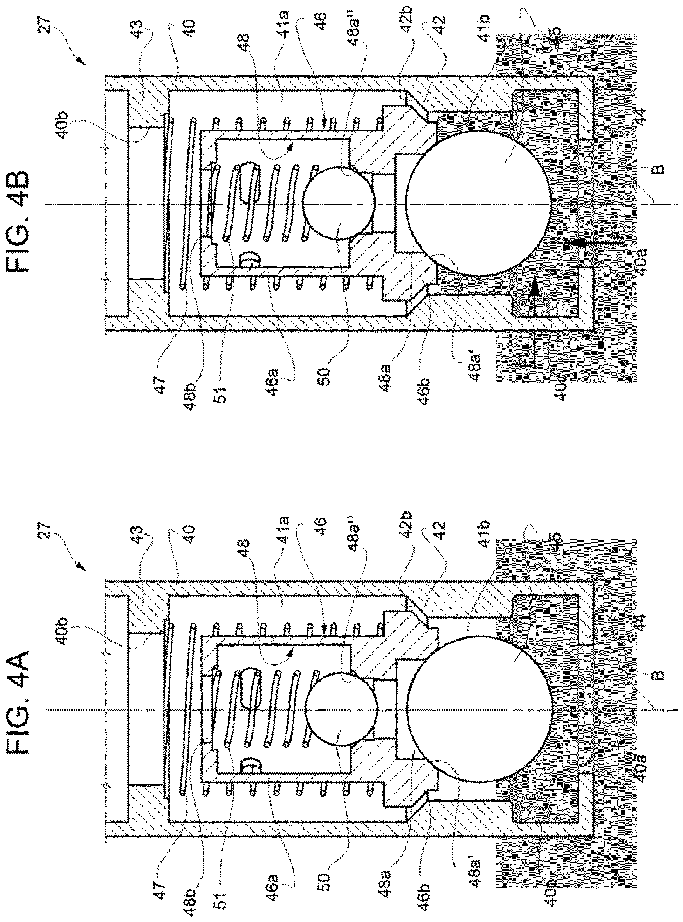

Figures 3A-3B and 4A-4B discloses an embodiment of the level management module 27 configured to achieve the above mentioned functionalities.

Level management module 27 comprises a housing 40 defining an inner cavity 41 and a first opening 40a fluidly connectable to tank 2, a second opening 40b fluidly connectable to source/discharge 7 and at least a third opening 40c fluidly connectable to tank 2.

In particular, first and second openings 40a, 40b are realized axially concentric to a longitudinal axis B of housing 40 which is accordingly tubular, i.e. wherein cavity 41 extends all along axis B from first and second openings 40a, 40b. In the described embodiment third opening 40c is a single opening realized in the lateral wall of housing 40 perpendicularly to axis B in proximity of first opening 40a.

In particular, inner cavity 41 comprises a first portion 41a and a second portion 41b; this latter has a diameter lower with respect to first portion 41a, thereby defining a first shoulder 42. Preferably, shoulder 42 has an inclined edge 42a joining inner surface laterally defining fist portion 41a with inner surface laterally defining second portion 41b; since this latter has a lower diameter, such inclined edge 42a defines a conical annular surface which tapers towards a longitudinal axis B of housing 40.

Housing 40 further defines a second shoulder 43, between first portion 41a and second opening 40b and a third shoulder 44 between second portion 41b and first opening 40a.

Level management module 27 further comprises a first ball 45 housed inside second portion 41b of cavity 41 and, in a rest condition, configured to cooperate in contact with first opening 40a so as to avoid passage of fluid through this latter. First ball 45 has instead a dimension that does not affect passage of fluid from third opening towards second opening 40b.

Level management module 27 further comprises a spool 46 housed inside first portion 41a of cavity 41 and comprising a cylindrical portion 46a, concentric to axis B, and a head portion 46b having a diameter greater than cylindrical portion 46a, i.e. extending radially from this latter perpendicularly to axis B. Preferably a terminal edge of head portion 46b has a conical shape which has a shape complementary to the one of edge 42a.

Level management module 27 further comprises an elastic element 47, housed in first portion 41a around cylindrical portion 46a of spool 46 and comprising a first extremity cooperating at contact with head portion 46b of spool 46 and a second extremity cooperating at contact with shoulder 43. Elastic element 47 is preferably a coil spring.

Spool 46 is configured to move along axis B between a first extreme position into which head portion 46b cooperates with edge 42a and a second extreme position into which elastic element 47 is compact or (in its absence) it touches shoulder 43. Preferably elastic element 47 is configured to maintain spool 46 in its first position.

Spool 46 is preferably tubular and defines an inner cavity 48 between a first axial opening 48a and a second axial opening 48b.

In particular, first opening 48a is defined in head portion 46b of spoon 46 and comprises a first edge 48a' directed towards ball 45 and a second edge 48a'' directed towards cavity 48, this second edge 48a'' has preferably a diameter lower than diameter of first edge 48a'. Second opening 48b is instead defined in an axial wall connecting together lateral walls of cylindrical portions 46a of spool 46. Both first and second openings 48a, 48b are concentric to axis B.

Level management module 27 further comprises a second ball 50 housed cavity 48 and, in a rest condition, configured to cooperate in contact with second edge 48a" of first opening 48a so as to avoid passage of fluid through this latter.

Level management module 27 further comprises an elastic element 51, housed in cavity 48 coaxial to axis B and comprising a first extremity cooperating at contact with axial wall defining second opening 48b and a second extremity cooperating at contact with second ball 50. Preferably elastic element 51 is a coil spring. Advantageously elastic element 51 is configured to maintain second ball 50 in its rest position.

Advantageously elastic elements 47 and 51 have a different stiffness, thereby allowing movement of spool 56 and ball 50 at different pressure exerted, respectively, on head portion 46b of spool 46 or on ball 50 itself. In particular, such stiffness allows to reach a 0,2 bar pressure on ball 50 and a 0,5 bar pressure on spool 46.

The operation of the above described hydraulic tank arrangement 1 according to the invention is the following.

Transmission pump 6 sucks oil from source 7, i.e. the discharge of lubricating hydraulic circuit 9, which is filtered via filter 12 from gross impurities. Such oil is pumped towards lubricating hydraulic circuit 9, while a part is spilled via conduit 16 towards filter 17 since, assuming that tank 2 is empty, no hydraulic pressure signal 19 switches selection valve 18 in its second position.

Accordingly, oil is filtered by filter 17 which has a smaller filter ratio with respect to filter 12 and enters into tank 2, filling this latter. Air which is present in tank 2, or residual in oil, may flow away thanks to breather 23 till tank 2 is full. Then, pressure will increase and air will flow out from level management module 27, first via check valve 28a till reaching first pressure level, i.e. 0,2 bar. Then, pressure may increase till reaching second pressure value, i.e. 0,5 bar, then it will be discharged via second check valve 28b towards source/discharge 7.

Oil into pressurized state in tank 2 will be sucked by main pump 3 and used by circuits 4, whose discharge will be drained towards filter 17 via conduit 22.

In greater particular, making reference to figure 2, the operation of the proposed embodiment of selection valve 18 is the following.

Till no hydraulic signal 19 comes through fourth opening 30d, elastic element 36 maintains spool 35 so that there is fluidic communication between first and second openings 30a, 3b. When hydraulic signal 19 starts to flow through fourth opening 30d, i.e. tank pressure is reaching about 0,35 bar pressure, this latter forces on spool 35 moving this latter against the force of elastic element 36. Accordingly, when the threshold limit, e.g. 0,35 bar, is reached, spool 35 is displaced so that fluidic communication between openings 30a, 3b is denied.

In greater particular, making reference to figures 3A -3B and 4A-4B, the operation of the proposed embodiment of level management module 27 is the following.

In figures 3A-3B is disclosed the operation of the first check valve 27a, i.e. when air is discharged till a preset pressure threshold, i.e. 0,2 bar, is reached. An air flow F may flow through third opening 30c inside cavity 41 indeed air flow has not enough force to push out ball 45 from first opening 40a; accordingly, since spool 46 is maintained by elastic element 47 in contact with edge 42 and since the force of such elastic element 47 cannot be overcome by air flow F, its pressure acts on second ball 50 which is then pushed out, allowing the passage of flow through first opening 48a of spool 46 and, then, towards second opening 40b of housing 40, i.e. to source 7.

Then, making reference to figures 4A-4B, it is disclosed the operation of the second and third check valves 27b, 27c, i.e. when air is discharged and oil starts to enter into housing 40 till a second pressure threshold, i.e. 0,5 bar, is reached. Once the first pressure level is reached, fluid F' starts to enter from third opening 40c and, moreover, acts against ball 45 thereby pushing this latter against edge 48a' of first opening 48a of spool 46, avoiding passage of fluid through this latter. Consequently, ball 50 returns into its rest position against edge 48a" pushed by elastic element 51. Then spool starts to move along axis B pushed by ball 45 and balanced by elastic element 47, till second pressure is reached, then fluid F' could flow laterally with respect to spool 60 (passing in the narrowing defined by this latter and the lateral walls of housing 40) and, if pressure further increases above the second threshold, it will be discharged to source/discharge 7.

In view of the foregoing, the advantages of a hydraulic tank arrangement 1 according to the invention are apparent.

The proposed tank hydraulic arrangement 1 allows to provide a tank 2 having a sufficient filtered oil to be used for power hydraulic circuits 5 of the vehicle. Accordingly, these latter may work with oil in good condition and avoiding cavitation phenomenon thanks to the "buffer" effect of the tank 2 in case of great oil demands.

Furthermore, since tank 2 is pressurized between a range of 0,2-0,5 bar, there is no need of a charge pump and main pump 3 may directly suck oil from tank 2 without the need of complex pump modules. Since charge pump is removed, there is a significant reduction of noise in the system.

Again, pump 3 sucks directly oil without any interposition of filters between tank and this latter. Indeed filter 17 is a return filter which cannot influence the operation of main pump 3 and, even, of transmission pump 6.

The use of two different filters 12 and 17, having two different filtering levels, allows to better control the oil filtering and increase their operational life.

It is clear that modifications can be made to the described hydraulic tank arrangement 1 which do not extend beyond the scope of protection defined by the claims.

Obviously pumps 3 and 6 typologies may be varied, such as their operation/coupling thanks to motor 13.

Further, selection valve 18 may be realized in a different way, such as the proposed embodiments of this latter and level control module 27 are merely exemplarily.

## Claims

1. Hydraulic arrangement (1) for managing fluid level in a tank (2) configured to store oil for the operation of at least one hydraulic circuit (5) of an off-road vehicle, said hydraulic arrangement (1) comprising:
- a first pump (6) configured to suck oil from a source (7) of oil towards a transmission hydraulic circuit (9) of said vehicle via a related conduit (11), said source (7) being the discharge of said transmission hydraulic circuit (9),
- a second pump (3) configured to suck oil from said tank (2) towards said hydraulic circuits (5),
- a spilling conduit (16) fluidly connecting said conduit (11) with said tank (2) for allowing a part of fluid sucked by said first pump (6) to fill said tank (2),
- a first filter (17) fluidly interposed in said spilling conduit (16) configured to filter oil before its entering into said tank (2)
- a level management module (27) configured to maintain the pressure of oil into said tank (2) below a predetermined pressure threshold and, if said pressure increases, to drain the excessive oil into said source (7).

2. Hydraulic arrangement according to claim 1, further comprising a selection valve (18), fluidly interposed on said spilling conduit (16) upstream to said first filter (17), said selection valve (18) being configured to allow passage of oil from said pump (6) towards said tank (2) if the pressure of oil into said tank (2) is below a predefined pressure threshold.

3. Hydraulic arrangement according to claim 2, wherein said selection valve (18) is hydraulically controlled by a pressure signal (19) taken by said tank (2).

4. Hydraulic arrangement according to any of the preceding claims, further comprising a second filter (12) fluidly interposed between said pump (6) and said source (7), said first filter (17) being configured to filter particles of lower dimensions with respect to said second filter (12).

5. Hydraulic arrangement according to any of the preceding claims, further comprising a breather (23) fluidly connecting said tank (2) to the environment and configured to allow air to exit from said tank (2) when said tank (2) is filled.

6. Hydraulic arrangement according to any of the preceding claims, wherein said first and second pumps (3, 6) are carried by a same motor (13).

7. Hydraulic arrangement according to claim 6, further comprising a gear ratio module (15) configured to vary the velocity/torque provided by said motor (13) to said first pump (3) with respect to said second pump (6).

8. Hydraulic arrangement according to any of the preceding claims, wherein said level management module (27) comprises a first and a second check valves (28a, 28b) fluidly interposed in parallel one with respect to the other between said tank (2) and said source (7).

9. Hydraulic arrangement according to claim 8, wherein said level management module (27) further comprises a third check valve (28c) fluidly in series upstream to said second check valve (28b) and in parallel to said first check valve (28a) .

10. Hydraulic arrangement according to claim 8 or 9, wherein said first and second check valves (28a, 28b) have different actuation pressure thresholds.

11. Hydraulic arrangement according to claim 8 or 9, wherein said first and second check valves (28a, 28b) are realized as one piece.

12. Hydraulic arrangement according to claim 11, when depending on claim 9, wherein said third check valve (28c) is further realized as one piece with said first and second check valves (28a, 28b).

13. Hydraulic arrangement according to any of the preceding claims, wherein said level management module (27) comprises a tubular housing (40) defining a first and a second opening (40a, 40b) concentric to a longitudinal axis (B) of said housing (40) and a third opening (40c) realized in proximity of said first opening (40a) in a wall perpendicular to the one carrying said first opening (40a), said first and third openings (40a, 40c) being configured to be fluidly connected to said tank (2), said second opening (40b) being configured to be connected to said source (7),
said housing (40) defining an inner volume (41) comprising a first portion (41a) delimited by a first and a second shoulders (42, 43) and a second portion (41b) between said first shoulder (42) and said first opening (40a),
said module (27) comprising a spool (46) housed in said first portion (41a) and configured to move along said axis (B) between a portion wherein this latter does not cooperate at contact with said first shoulder (42) and a second position into which it cooperates at contact with this latter, said spool (46) being tubular and defining an inner portion (48) provided with a first axial opening (48a) and a second axial opening (48b), both concentric to said axis B,
said module (27) comprising a first ball (45) housed in said second portion (41b) and configured to assume, in function of fluid pressure passing through said first opening (40a), a first position into which it cooperates at contact with said first opening (40a), thereby avoiding passage of fluid through this latter, and a second position into which it cooperates at contact with said first axial opening (48a) thereby avoiding passage of fluid through this latter while, at the same time, allowing passage of fluid through said first opening (40),
said module (27) comprising a second ball (50) housed in said cavity (48) of said spool (46) and configured to assume, in function of fluid pressure passing through said first axial opening (48a), a first position into which it cooperates at contact with said first opening (48a), thereby avoiding passage of fluid through this latter, and a second position into which it allows passage of fluid through this latter.

14. Hydraulic arrangement according to claim 13, wherein said module (27) further comprises
a first elastic element (47) interposed between said spool (46) and said housing (40) so as to maintain this latter in contact to said shoulder (42) and
a second elastic member (51) interposed between said second ball (50) and said spool (46) so as to maintain said ball (50) in contact to said first axial opening (48a).

15. Off-road vehicle comprising a transmission lubricated by a hydraulic transmission lubricating arrangement (9) and a plurality of hydraulic circuits (5) for controlling different operation of said vehicle, said off-road vehicle comprising a hydraulic arrangement according to any of the preceding claims.

## Patentansprüche

1. Hydraulikanordnung (1) zum Regeln des Fluidstands in einem Tank (2), der dazu eingerichtet ist, Öl für den Betrieb von mindestens einem Hydraulikkreislauf (5) eines Geländefahrzeugs zu speichern, wobei die Hydraulikanordnung (1) umfasst:
• eine erste Pumpe (6), die dazu eingerichtet ist, Öl über eine entsprechende Leitung (11) von einer Ölquelle (7) zu einem Getriebe-Hydraulikkreislauf (9) des Fahrzeugs anzusaugen, wobei die Quelle (7) der Ablauf des Getriebe-Hydraulikkreislaufs (9) ist,
• eine zweite Pumpe (3), die dazu eingerichtet ist, Öl von dem Tank (2) zu den Hydraulikkreisläufen (5) anzusaugen,
• eine Überlaufleitung (16), die die Leitung (11) fluidisch mit dem Tank (2) verbindet, um zu ermöglichen, dass ein Teil des Fluids, das von der ersten Pumpe (6) angesaugt wird, den Tank (2) füllt,
• einen ersten Filter (17), der fluidisch in der Überlaufleitung (16) angeordnet ist und dazu eingerichtet ist, Öl vor dem Eintritt in den Tank (2) zu filtern,
• eine Füllstand-Regelungseinrichtung (27), die dazu eingerichtet ist, den Druck des Öls im Tank (2) unter einem vorbestimmten DruckGrenzwert zu halten und das überschüssige Öl in die Quelle (7) abfließen zu lassen, falls der Druck steigt.

2. Hydraulikanordnung nach Anspruch 1, weiterhin umfassend ein Umschaltventil (18), das fluidisch an der Überlaufleitung (16) stromaufwärts des ersten Filters (17) angeordnet ist, wobei das Umschaltventil (18) dazu eingerichtet ist, den Durchtritt von Öl von der Pumpe (6) zu dem Tank (2) zu ermöglichen, falls der Druck des Öls in dem Tank (2) unter einen vordefinierten Druckgrenzwert ist.

3. Hydraulikanordnung nach Anspruch 2, wobei das Umschaltventil (18) von einem Drucksignal (19) hydraulisch gesteuert wird, das von dem Tank (2) abgenommen wird.

4. Hydraulikanordnung nach einem der vorangehenden Ansprüche, weiterhin umfassend einen zweiten Filter (12), der fluidisch zwischen der Pumpe (6) und der Quelle (7) angeordnet ist, wobei der erste Filter (17) dazu eingerichtet ist, im Vergleich zum zweiten Filter (12) Partikel mit geringeren Abmessungen zu filtern.

5. Hydraulikanordnung nach einem der vorangehenden Ansprüche, weiterhin umfassend ein Entlüftungselement (23), das den Tank (2) fluidisch mit der Umwelt verbindet und dazu eingerichtet ist, Luft aus dem Tank (2) austreten zu lassen, wenn der Tank (2) gefüllt wird.

6. Hydraulikanordnung nach einem der vorangehenden Ansprüche, wobei die erste und die zweite Pumpe (3, 6) von demselben Motor (13) getragen werden.

7. Hydraulikanordnung nach Anspruch 6, weiterhin umfassend eine Getriebeübersetzungseinrichtung (15), die dazu eingerichtet ist, die Geschwindigkeit bzw. das Drehmoment zu verändern, die der ersten Pumpe (3) im Vergleich zur zweiten Pumpe (6) von dem Motor (13) bereitgestellt werden.

8. Hydraulikanordnung nach einem der vorangehenden Ansprüche, wobei die Füllstand-Regelungseinrichtung (27) weiterhin ein erstes und ein zweites Rückschlagventil (28a, 28b) umfasst, die fluidisch parallel zueinander zwischen dem Tank (2) und der Quelle (7) angeordnet sind.

9. Hydraulikanordnung nach Anspruch 8, wobei die Füllstand-Regelungseinrichtung (27) weiterhin ein drittes Rückschlagventil (28c) umfasst, das fluidisch in Reihe stromaufwärts des zweiten Rückschlagventils (28b) und parallel zum ersten Rückschlagventil (28a) angeordnet ist.

10. Hydraulikanordnung nach Anspruch 8 oder 9, wobei das erste und das zweite Rückschlagventil (28a, 28b) unterschiedliche Betätigungsdruckgrenzwerte aufweisen.

11. Hydraulikanordnung nach Anspruch 8 oder 9, wobei das erste und das zweite Rückschlagventil (28a, 28b) als ein Teil realisiert sind.

12. Hydraulikanordnung nach Anspruch 11 in Abhängigkeit von Anspruch 9, wobei das dritte Rückschlagventil (28c) weiterhin als ein Teil mit dem ersten und dem zweiten Rückschlagventil (28a, 28b) realisiert ist.

13. Hydraulikanordnung nach einem der vorangehenden Ansprüche, wobei die Füllstand-Regelungseinrichtung (27) ein rohrförmiges Gehäuse (40) umfasst, das eine erste und eine zweite Öffnung (40a, 40b) konzentrisch zu einer Längsachse (B) des Gehäuses (40) und eine dritte Öffnung (40c) definiert, die in der Nähe der ersten Öffnung (40a) in einer Wand senkrecht zu der Wand vorgesehen ist, die die erste Öffnung (40a) aufweist, wobei die erste und die dritte Öffnung (40a, 40c) dazu eingerichtet sind, fluidisch mit dem Tank (2) verbunden zu sein, wobei die zweite Öffnung (40b) dazu eingerichtet ist, mit der Quelle (7) verbunden zu sein,
wobei das Gehäuse (40) ein inneres Volumen (41) definiert, das einen ersten Abschnitt (41a), der durch einen ersten und einen zweiten Absatz (42, 43) begrenzt ist, und einen zweiten Abschnitt (41b) umfasst, der zwischen dem ersten Absatz (42) und der ersten Öffnung (40a) angeordnet ist,
wobei die Einrichtung (27) einen Kolben (46) umfasst, der in dem ersten Abschnitt (41a) aufgenommen ist und dazu eingerichtet ist, sich entlang der Achse (B) zwischen einem Bereich, in dem er nicht in Kontakt mit dem ersten Absatz (42) zusammenwirkt, und einer zweiten Position zu bewegen, in der er in Kontakt mit diesem zusammenwirkt,
wobei der Kolben (46) rohrförmig ausgebildet ist und einen inneren Abschnitt (48) definiert, der mit einer ersten axialen Öffnung (48a) und einer zweiten axialen Öffnung (48b) versehen ist, die beide konzentrisch zur Achse B sind,
wobei die Einrichtung (27) eine erste Kugel (45) umfasst, die im zweiten Abschnitt (41b) aufgenommen ist und dazu eingerichtet ist, in Abhängigkeit des Fluiddrucks, der durch die erste Öffnung (40a) tritt, eine erste Position einzunehmen, in der sie in Kontakt mit der ersten Öffnung (40a) zusammenwirkt, wodurch der Durchtritt von Fluid durch Letztere vermieden wird, und eine zweite Position einzunehmen, in der sie in Kontakt mit der ersten axialen Öffnung (48a) zusammenwirkt, wodurch der Durchtritt von Fluid durch Letztere vermieden wird, während gleichzeitig der Durchtritt von Fluid durch die erste Öffnung (40) ermöglicht wird,
wobei die Einrichtung (27) weiterhin eine zweite Kugel (50) umfasst, die in dem Hohlraum (48) des Kolbens (46) aufgenommen ist und dazu eingerichtet ist, in Abhängigkeit des Fluiddrucks, der durch die erste axiale Öffnung (48a) tritt, eine erste Position einzunehmen, in der sie in Kontakt mit der ersten Öffnung (48a) zusammenwirkt, wodurch der Durchtritt von Fluid durch Letztere vermieden wird, und eine zweite Position einzunehmen, in der sie den Durchtritt von Fluid durch Letztere ermöglicht.

14. Hydraulikanordnung nach Anspruch 13, wobei die Einrichtung (27) weiterhin umfasst:
ein erstes elastisches Element (47), das zwischen dem Kolben (46) und dem Gehäuse (40) angeordnet ist, um ihn in Kontakt mit dem Absatz (42) zu behalten, und
ein zweites elastisches Element (51), das zwischen der zweiten Kugel (50) und dem Kolben (46) angeordnet ist, um die Kugel (50) in Kontakt mit der ersten axialen Öffnung (48a) zu halten.

15. Geländefahrzeug mit einem Getriebe, das von einer hydraulischen Getriebeschmieranordnung (9) geschmiert wird, und einer Mehrzahl von Hydraulickreisläufen (5) zum Steuern unterschiedlicher Funktionen des Fahrzeuges, wobei das Geländefahrzeug eine Hydraulikanordnung nach einem der vorangehenden Ansprüche umfasst.

## Revendications

1. - Dispositif hydraulique (1) de gestion du niveau du fluide dans un réservoir (2) configuré pour stocker l'huile pour le fonctionnement d'au moins un circuit hydraulique (5) d'un véhicule tout-terrain, ledit dispositif hydraulique (1) comprenant :
- une première pompe (6) configurée pour aspirer l'huile d'une source (7) d'huile vers un circuit de transmission hydraulique (9) dudit véhicule par le biais d'un conduit connexe (11), ladite source (7) étant la décharge dudit circuit de transmission hydraulique (9),
- une deuxième pompe (3) configurée pour aspirer l'huile dudit réservoir (2) vers lesdits circuits hydrauliques (5),
- un conduit de déversement (16) reliant fluidiquement ledit conduit (11) audit réservoir (2) pour permettre à une partie du fluide aspirée par ladite première pompe (6) de remplir ledit réservoir (2),
- un premier filtre (17) interposé fluidiquement dans ledit conduit de déversement (16) configuré pour filtrer l'huile avant son entrée dans ledit réservoir (2),
- un module de gestion de niveau (27) configuré pour maintenir la pression de l'huile dans ledit réservoir (2) sous un seuil de pression prédéterminé et, si ladite pression augmente, pour vidanger l'huile excessive dans ladite source (7).

2. Dispositif hydraulique selon la revendication 1, comprenant en outre une vanne de sélection (18), interposée fluidiquement sur ledit conduit de déversement (16) en amont dudit premier filtre (17), ladite vanne de sélection (18) étant configurée pour permettre à l'huile de passer de ladite pompe (6) audit réservoir (2) si la pression de l'huile dans ledit réservoir (2) est inférieure à un seuil de pression prédéterminé.

3. Dispositif hydraulique selon la revendication 2, dans lequel ladite vanne de sélection (18) est commandée de manière hydraulique par un signal de pression (19) reçu par ledit réservoir (2).

4. Dispositif hydraulique selon l'une quelconque des revendications précédentes, comprenant en outre un deuxième filtre (12) interposé fluidiquement entre ladite pompe (6) et ladite source (7), ledit premier filtre (17) étant configuré pour filtrer des particules de dimensions inférieures par rapport audit deuxième filtre (12).

5. Dispositif hydraulique selon l'une quelconque des revendications précédentes, comprenant en outre un reniflard (23) reliant fluidiquement ledit réservoir (2) à l'environnement et configuré pour permettre à l'air de sortir dudit réservoir (2) lorsque ledit réservoir (2) est rempli.

6. Dispositif hydraulique selon l'une quelconque des revendications précédentes, dans lequel lesdites première et deuxième pompes (3, 6) sont supportées par un seul et même moteur (13).

7. Dispositif hydraulique selon la revendication 6, comprenant en outre un module de rapport d'engrenage (15) configuré pour faire varier la vitesse/le couple fourni(e) par ledit moteur (13) à ladite première pompe (3) par rapport à ladite deuxième pompe (6).

8. Dispositif hydraulique selon l'une quelconque des revendications précédentes, dans lequel ledit module de gestion de niveau (27) comprend un premier et un deuxième clapet anti-retour (28a, 28b) interposés fluidiquement de manière parallèle l'un par rapport à l'autre entre ledit réservoir (2) et ladite source (7).

9. Dispositif hydraulique selon la revendication 8, dans lequel ledit module de gestion de niveau (27) comprend en outre un troisième clapet anti-retour (28c) fluidiquement en série en amont dudit deuxième clapet anti-retour (28b) et parallèle audit premier clapet anti-retour (28a).

10. Dispositif hydraulique selon les revendications 8 ou 9, dans lequel lesdits premier et deuxième clapets anti-retour (28a, 28b) ont différents seuils de pression d'actionnement.

11. Dispositif hydraulique selon les revendications 8 ou 9, dans lequel lesdits premier et deuxième clapets anti-retour (28a, 28b) sont réalisés en une seule pièce.

12. Dispositif hydraulique selon la revendication 11, lorsqu'elle est dépendante de la revendication 9, dans lequel ledit troisième clapet anti-retour (28c) est en outre réalisé en une seule pièce avec lesdits premier et deuxième clapets anti-retour (28a, 28b).

13. Dispositif hydraulique selon l'une quelconque des revendications précédentes, dans lequel ledit module de gestion de niveau (27) comprend un boîtier tubulaire (40) définissant une première et une deuxième ouverture (40a, 40b) concentriques par rapport à un axe longitudinal (B) dudit boîtier (40) et une troisième ouverture (40c) réalisée à proximité de ladite première ouverture (40a) dans une paroi perpendiculaire à celle portant la première ouverture (40a), lesdites première et troisième ouvertures (40a, 40c) étant configurées pour être reliées fluidiquement audit réservoir (2), ladite deuxième ouverture (40b) étant configurée pour être reliée à ladite source (7),
ledit boîtier (40) définissant un volume intérieur (41) comprenant une première partie (41a) délimitée par un premier et un deuxième accotement (42, 43) et une deuxième partie (41b) entre ledit premier accotement(42) et ladite première ouverture (40a),
ledit module (27) comprenant une bobine (46) logée dans ladite première partie (41a) et configurée pour se déplacer le long dudit axe (B) entre une partie dans laquelle ce dernier ne coopère pas au contact avec ledit premier accotement(42) et une deuxième position dans laquelle il coopère au contact avec ce dernier, ladite bobine (46) étant tubulaire et définissant une partie intérieure (48) prévue d'une première ouverture axiale (48a) et d'une deuxième ouverture axiale (48b), les deux étant concentriques par rapport audit axe B,
ledit module (27) comprenant une première balle (45) logée dans ladite deuxième partie (41a) et configurée pour assumer, en fonction de la pression du fluide traversant ladite première ouverture (40a), une première position dans laquelle elle coopère au contact avec ladite première ouverture (40a), évitant ainsi le passage du fluide à travers cette dernière, et une deuxième position dans laquelle elle coopère au contact avec ladite première ouverture axiale (48a), évitant ainsi le passage du fluide à travers cette dernière tout en permettant, en même temps, le passage du fluide à travers ladite première ouverture (40),
ledit module (27) comprenant une deuxième balle (50) logée dans ladite cavité (48) de ladite bobine (46) et configurée pour adopter, en fonction de la pression du fluide traversant ladite première ouverture axiale (48a), une première position dans laquelle elle coopère au contact avec ladite première ouverture (48a), évitant ainsi le passage du fluide à travers cette dernière, et une deuxième position dans laquelle elle permet le passage du fluide à travers cette dernière.

14. Dispositif hydraulique selon la revendication 13, dans lequel ledit module (27) comprend en outre
un premier élément élastique (47) interposé entre ladite bobine (46) et ledit boîtier (40) de manière à maintenir ce dernier en contact avec ledit accotement(42) et
un deuxième élément élastique (51) interposé entre ladite deuxième balle (50) et ladite bobine (46) de manière à maintenir ladite balle (50) en contact avec ladite première ouverture axiale (48a).

15. Véhicule tout-terrain comprenant une transmission lubrifiée par un dispositif de lubrification pour transmission hydraulique (9) et une pluralité de circuits hydrauliques (5) pour commander différentes opérations dudit véhicule, ledit véhicule tout-terrain comprenant un dispositif hydraulique selon l'une quelconque des revendications précédentes.
